(19) Europäisches Patentamt

European Patent Office

Office européen des brevets

(11) **EP 0 809 324 B1**

(12) **EUROPÄISCHE PATENTSCHRIFT**

(45) Veröffentlichungstag und Bekanntmachung des Hinweises auf die Patenterteilung:
**28.08.2002 Patentblatt 2002/35**

(51) Int Cl.⁷: **H01Q 15/16**, G01F 23/284

(21) Anmeldenummer: **97105883.9**

(22) Anmeldetag: **10.04.1997**

(54) **Parabolantenne zur Messung des Füllstands in Behältern**

Parabolic antenna for filling level measurement in a container

Antenne parabolique pour la mesure du niveau d'un fluide dans un réservoir

(84) Benannte Vertragsstaaten:
**DE FR GB IT NL**

(30) Priorität: **20.05.1996 DE 19620272**
**30.01.1997 DE 19703346**

(43) Veröffentlichungstag der Anmeldung:
**26.11.1997 Patentblatt 1997/48**

(73) Patentinhaber: **Endress + Hauser GmbH + Co.KG.**
**79689 Maulburg (DE)**

(72) Erfinder: **Schneider, Hans-Josef**
**51375 Leverkusen (DE)**

(56) Entgegenhaltungen:
**EP-A- 0 261 257**        **DE-C- 19 500 324**
**US-A- 3 397 399**        **US-A- 4 527 166**
**US-A- 5 507 181**

## Beschreibung

Die Erfindung betrifft eine Parabolantenne zur Fokussierung von Sendeimpulsen bei einer Messung des Füllstandes in geschlossenen Behältern mit einer kombinierten Sende- und Empfangseinrichtung, mit welcher Sendeimpulse über die Parabolantenne auf die Oberfläche des Füllgutes, dessen Füllhöhe gemessen werden soll, gerichtet sind und deren Echoimpulse nach der Reflexion auf der Oberfläche des Füllgutes wieder von der kombinierten Sende- und Empfangseinrichtung über die Parabolantenne empfangen werden, die Antenne zur Durchführung des Meßgerätes durch eine Öffnung des Behälters faltbar ist und aus der Laufzeit der Impulse von der Sendeeinrichtung zur Oberfläche des Füllgutes und zurück zur Empfangseinrichtung der Abstand zwischen der Sende- und Empfangseinrichtung und der Füllgutoberfläche ermittelt und daraus die Füllhöhe in dem Behälter errechnet und das Füllstandssignal analog und/oder digital zur Weiterverarbeitung ausgegeben wird. Die Weiterverarbeitung kann in einer prozesstechnischen Komponente, wie Schreiber, Anzeiger oder einer prozessnahen Komponente eines Prozessleitsystems oder einer speicherprogrammierbaren Steuerung erfolgen.

Als Sende- und Empfangseinrichtungen haben sich Ultraschallsensoren und in vermehrtem Maße Mikrowellensensoren bewährt. Ohne die Anwendung der Erfindung für Ultraschallsensoren auszuschließen, soll davon ausgegangen werden, daß es sich bei dem Füllstandsmeßgerät um ein Mikrowellen-Füllstandsmeßgerät handelt. Aber nicht nur zur Messung des Füllstandes in Behältern oder Tanks werden solche Geräte eingesetzt, sondern auch in verfahrenstechnischen Apparaturen, wie z. B. Reaktoren, Zentrifugen, Mischer, Trichter, Sichter, oder Wärmebehandlungsöfen und ähnliche Einrichtungen, welche in der Lebensmittel-, Pharma-, Bio-, Gen- und Petrochemie Anwendung finden. Außer dem beschriebenen Impulsverfahren (Laufzeitmeßverfahren) kommen auch Geräte nach dem FMCW (Frequenz Modulated Continous Wave) - Verfahren zum Einsatz. Solche Mikrowellen-Füllstandsmeßgeräte sind mit einer Stab- oder einer Hornantenne ausgerüstet.

Sehr häufig kommt es in der Prozeßmeßtechnik oder Prozeßleittechnik vor, daß die Füllhöhe eines Mediums unter schwierigen und/oder beengten Raumverhältnissen gemessen werden soll. Nämlich dann, wenn die Oberfläche des Meßmediums einen Großteil der Sendeenergie verschluckt, d.h. die Füllgutoberfläche wellig ist, das Füllgut kleine Dielektrizitätskonstanten um 1,2 bis 2,0 aufweist oder sich die Meßstelle in der Nähe der Behälterwand oder von Rührwerken, Einträgen oder anderen störenden Einbauten befindet. Hinzu kommt, je genauer die Messung erfolgen soll, und je schwieriger die Bedingungen am Meßort sind, um so mehr Wert muß auf ein geeignetes Antennensystem Wert gelegt werden.

Ausgehend von der bekannten Gleichung

$$\frac{P_R}{P_T} \approx \frac{D^4 \times \delta^2}{H \times \lambda^2}$$

dabei sind:

$P_R$ - empfangene Leistung; $P_T$ - ausgehende Leistung; D - Durchmesser der Parabolantenne; H - Behälterhöhe, Meßdistanz; $\delta$ - Relexionskoeffizient als Funktion von Füllgut, Art der Füllgutoberfläche, usw.; $\lambda$ - Wellenlänge,

ist es in einem solchen Fall dem Fachmann bekannt und üblich, den Sendeimpuls über eine parabolische Antenne zu fokussieren und einen verstärkten gebündelten Impuls auf die Füllgutoberfläche zu richten. Der Einsatz einer solchen Parabolantenne bedeutet zwar eine hohe und auch dem eichamtlichen Verkehr genügende Meßgenauigkeit, aber der Nachteil der bisher verwendeten Parabolantennen liegt darin, daß der Durchmesser von Stab- oder Hornantennen üblicherweise 80 - 200 mm beträgt, der Durchmesser von bisher bekannten Parabolantennen 200 - 800 mm, ja sogar 1200 mm groß ist. Dies bedeutet, daß beim Einbau solcher Meßgeräte in bestehende geschlossene Behälter oder andere verfahrenstechnische Apparate Einbauöffnungen mit in ebenso großen Durchmessern eingebracht und wieder lösbar mit Deckeln oder Flanschen verschlossen werden müssen. Sehr häufig liegt aber auch der ideale Meßort, ca. 0,15 X 0,3 X Radius der Behälterwand, an einer Stelle, wo keine so großen Öffnungen in die Behälterwand oder den Deckel eines Behälters eingebracht werden können. Somit steht zwar ein geeignetes, den Sendeimpuls fokussierendes Meßgerät zur Verfügung, das sich jedoch wegen der Größe der dazu notwendigen Öffnung in der Behälterwand nur mit erheblichen Aufwand einbringen läßt.

Um diesen Nachteil zu beheben, schlägt das Deutsche Patent 195 00 324 einen Antennenreflektor vor, welcher aus mehreren schwenkbaren Reflektorsegmenten besteht und jedes Segment an einen, durch eine Öffnung in den Behälter einbringbaren Befestigungszylinder über ein einachsiges Drehgelenk gelagert ist und die Segmente über ein Stellglied in eine gegenüber der Zylinderachse abgewinkelte Lage verschwenkt werden können.

Nachteilig ist diesem Antennenreflektor, daß über ein Stellglied ausgelöst, lediglich ein Verschwenken der Reflektorsegmente in eine gegenüber der Zylinderachse abgewinkelte Lage also ein Öffnen erfolgt, während ein zwangsweises Verschwenken der Segmente in eine Lage entlang der Achse des Befestigungszylinders, also ein Schließen, welches allein eine Wiederausführung der Antenne aus dem Behälter ermöglicht, bei der Vorrichtung gemäß diesem Patent nicht vorgesehen ist.

Die rauhen Umweltbedingungen am Meßort innerhalb des Behälters verursachen aber sehr schnell eine solch starke Verschmutzung des Antennenreflektors, daß im Falle einer notwendigen Demontage und Wiederausbringung der Antenne aus dem Behälter ein Schließen unmöglich ist oder doch stark behindert wird, so daß bei versuchter zwangsweiser Schließung des Reflektors sogar mit einer Beschädigung gerechnet werden kann.

Aus der US-PS 4,683,475 ist ebenfalls ein faltbarer Antennenreflektor bekannt geworden, welcher an Stelle von stabilen Einzelelementen aus einer faltbaren flexiblen metallbeschichteten Folie besteht. Ein axial verschiebbarer Hauptschieber ist mit den Schirmschienen verbunden. Die axiale Verschiebung bewirkt das Öffnen und Zusammenfalten des Antennenreflektors. Obwohl der hier gezeigte Antennenreflektor ebenfalls zum Empfang und der Reflexion von Mikrowellen geeignet ist, liegt die Aufgabe und damit die Gestaltung der Antenne in der Übertragung von hochfrequenten Signalen. Sie ist für den vorliegenden Fall zur Anwendung in der Prozeßtechnik völlig ungeeignet.

Demgegenüber liegt der Erfindung die Aufgabe zugrunde, eine faltbare Parabolantenne vorzuschlagen, welche zusammengefaltet in eine Öffnung kleineren Durchmessers eines Behälters eingeführt, im Innern des Behälters zwangsweise geöffnet werden und im Falle der Notwendigkeit ebenso zwangsweise wieder gefaltet und ausgeführt werden kann.

Gelöst wird diese Aufgabe durch die in den Patentansprüchen gekennzeichneten Merkmale. Ausgestaltungen der Erfindung sind in den Unteransprüchen gekennzeichnet.

Anhand der Zeichnungen soll die Erfindung näher beschrieben werden.

Es zeigen

Fig. 1 die Darstellung eines Mikrowellen-Füllstandsmeßgerätes, bei welchem die Parabolantenne angewendet ist;

Fig. 2 einen Abschnitt des in Fig. 1 gezeigten Mikrowellen-Füllstandsmeßgerätes mit einem ersten Ausführungsbeispiel der faltbaren Antenne;

Fig. 3 ein zweites Ausführungsbeispiel der faltbaren Antenne;

Fig. 4 ein weiteres Ausführungsbeispiel der faltbaren Antenne.

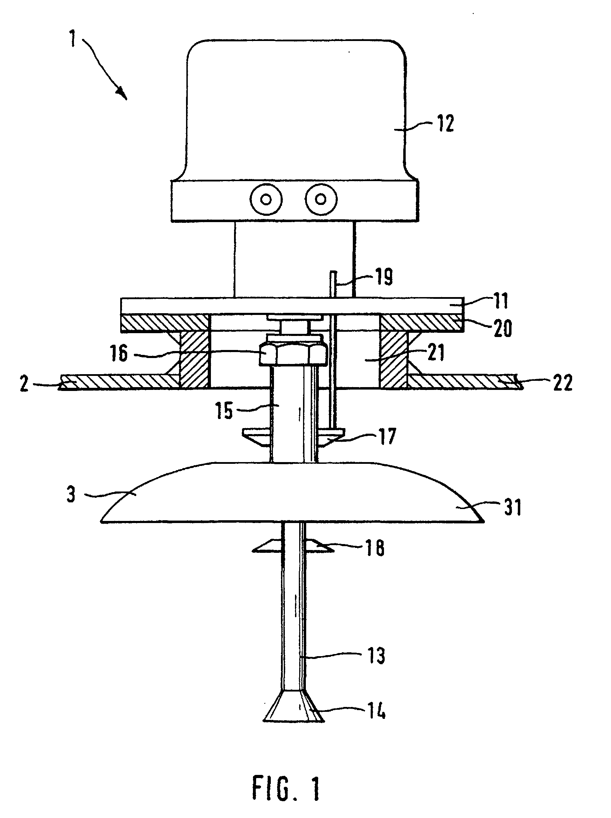

In Fig. 1 ist mit 1 ein Füllstandsmeßgerät dargestellt, welches beispielhaft ein Mikrowellen-Füllstandsmeßgerät sein soll. Das Füllstandsmeßgerät dient dazu, die Füllhöhe eines Meßmediums zu ermitteln, welches sich im Innern eines Behälters befindet und den Meßwert analog und/oder digital zur Weiterverarbeitung auszugeben. Dazu ist das Füllstandsmeßgerät 1 mittels eines Geräteflansches 11 mit einem Behälterflansch 20 verschraubt, welcher die Öffnung 21 eines Behälters 2 umschließt. Der Behälter 2 ist durch ein kurzes Stück der Behälterwand oder des Behälterdeckels 22 angedeutet. Das Füllstandsmeßgerät weist ein Gehäuse 12 auf, in dessen Innenraum sich die elektrischen / elektronischen Bauelemente befinden, mit denen das Füllstandsmeßgerät betrieben und das Meßsignal erzeugt und übertragen wird. In Richtung Behälterinnenraum erstreckt sich von dem Geräteflansch 11 das Antennenrohr 13 an dessen Flansch abgewandten Ende der kombinierte Mikrowellensenden und Empfänger 14 angeordnet ist. Zwischen dem Geräteflansch 11 und dem Mikrowellensender und -empfänger 14 ist eine Parabolantenne 3 so mit dem Antennenrohr 13 verbunden, daß der Parabolschirm 31 die Symmetrieachse des Antennenrohres 13 symmetrisch umläuft. Dabei ist der Abstand zwischen Sende- und Empfangseinrichtung 14 und der Parabolantenne 3 so gewählt, daß sich der Sender und Empfänger 14 genau im Brennpunkt der Parabolantenne 3 befindet. Der Sendeteil der Sende- und Empfangseinrichtung 14 strahlt eine Mikrowelle in Richtung der Innenwand des Parabolschirms 31 ab. Dieser wird durch die Tangenteneigenschaft des Paraboloiden so reflektiert, daß die Mikrowelle parallel zur Längsachse des Antennenrohres 13 auf das im Innern des Behälters befindliche Füllgut gerichtet ist und nach der Reflexion an der als Reflexionsebene wirkenden Füllgutoberfläche als Echowelle wieder den Parabolschirm 31 der Parabolantenne 3 erreicht, dort erneut reflektiert und nun so gebündelt auf den, im Brennpunkt befindlichen Empfänger 14 gerichtet ist.

Um die Parabolantenne 3 im Innern des Behälters 2 anzuordnen muß die Öffnung 21 dem Außendurchmesser der Antenne 3 entsprechen. Eine solche große Öffnung ist aber sehr häufig gar nicht vorhanden oder nur mit großen Aufwand in die Behälterwand oder den Behälterdeckel einzubringen, oder vorhandene große Flanschöffnungen sind bereits anderweitig vergeben. Außerdem bedeutet das Einbringen einer so großen Öffnung, welche wieder druckdicht verschlossen werden muß, einen erheblichen Aufwand an Arbeit und Kosten. Auch muß dann das Meßgerät über einen so großen Geräteflansch verfügen, daß dessen Durchmesser dem Durchmesser der Behälteröffnung und damit der Parabolantenne entspricht. Um diesem Nachteil abzuhelfen, wurde bereits vorgeschlagen, die Parabolantenne 3 zusammenfaltbar zu gestalten, damit die Antenne im geschlossenem Zustand durch eine wesentlich kleinerer Öffnung der Behälterwand oder des Behälterdeckels eingeführt und im Innern des Behälters geöffnet werden kann. In der Weiterentwicklung dieses Standes der Technik soll die Verschwenkung der Antennenelemente mittels der Verstellvorrichtung 15 geschehen. Der Sechskant 16 deutet diese Verstellmöglichkeiten durch die Wirkung des Drehmomentes eines aufgesteckten Schraubenschlüssels an. Bei der Anwendung solcher Antennen in der Prozeßtechnik sind diese einer enormen Umweltbelastung ausgesetzt. Wechselnde Temperaturen, trockene und feuchte Stäube, anbakkende Füllgüter, usw. schränken die Beweglichkeit der Verstellsegmente schon nach kurzer Zeit erheblich ein. Außerdem ist es wichtig, daß zur Erlangung der Funktionsfähigkeit die Öffnung sowie Schließung der Parabolantenne vollkommen erfolgt, deshalb schlägt die Erfindung vor, sowohl das Öffnen wie auch das Schließen der Antenne zwangsbewegt von der Öffnung 21 her auszuführen. Um außerdem im Falle einer Funktionsbeeinträchtigung durch extremen Schmutz, bzw. extremen Anbackungen die Antenne von außen reinigen zu können, ist an dem Antennenrohr 13 eine Reinigungseinrichtung 17, 18 angeordnet. Mit Hilfe von Düsen wird dabei ein Strahl von Druckluft oder eine Reinigungsflüssigkeit auf die Antenne gerichtet und diese dadurch von die Funktion beeinträchtigenden extremen Schmutz, bzw. extremen Anbackungen bei Füllgütern wie Teer, Bitumen und dergleichen, befreit. Eine Zuleitung 19 durchdringt den Flansch 11 und ist somit von außerhalb des Behälters anschließbar.

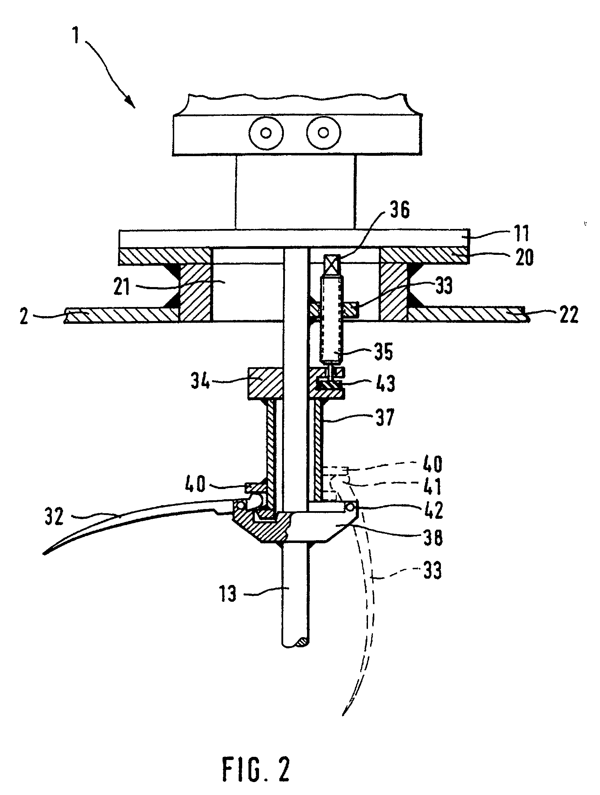

Figur 2 zeigt ein erstes Ausführungsbeispiel der Erfindung. Hier sind mit gleichen Positionszahlen wiederum ein Teil des Füllstandsmeßgerätes 1, der Behälter 2, die Flansche 11 und 20, die Öffnung 21, die Behälterwand 22, und das Antennenrohr 13 gezeigt. Die Parabolantenne 3 ist lediglich durch zwei Schirmschienen 32, 33 dargestellt. Alle weiteren Teile sind der besseren Übersicht wegen weggelassen worden. In Fig. 2 nimmt die linke Schirmschiene 32 eine Position in ausgeschwenkter Lage, also so wie bei geöffneter Antenne und die rechte, gestrichelt dargestellte Schirmschiene 33 eine Lage, bei geschlossener Antenne ein. Die beiden Schirmschienen 32, 33 sind jeweils in einem Schwenklager 42 gelagert. In einer wie rechts gezeigten Lage wird die Antenne durch die Öffnung 21 in den Behälter 2 eingeführt und vor Aufsetzen des Flansches 11 mittels des Stellgetriebes 34 entfaltet. Dazu wird die Spindel 35 mit dem Drehmoment eines auf die Passung 36 aufgesetzten Schlüssels so um ihre Achse gedreht, daß sich der Schieber 37 in Richtung des Lagerringes 38 bewegt. Die Spindel 35 wird über die am Antennenrohr 13 befestigte Spindelmutter 39 translatorisch bewegt. Auf der, der Sende- und Empfangseinrichtung 14 zugewandten Seite sind an dem Schieber 37 Aufnahmen 40 angeformt. In die Aufnahmen 40 greifen die kugelförmigen Enden 41 des kurzen Schenkels der Schirmschienen 32, 33 ein. Die parallelen Platten der Aufnahmen 40 stehen mit den kugelförmigen Enden 41 in formschlüssiger Verbindung. Die Bewegung des Schiebers 37 bewirkt die Ausübung eines Momentes auf die kugelförmigen Schenkel 41 der Schirmschienen 32, 33, so daß diese um den Drehpunkt der Schwenklager 42 verschwenkt werden und im Anschlag des Schiebers 37 an dem Lagerring 38 eine genau definierte Stellung einnehmen, welche der Funktionslage der Antenne 3 entspricht. In dieser Lage kann nun das Füllstandsmeßgerät richtig auf den Flansch 20 aufgesetzt und die Flansche 11 und 20 mit einander verschraubt werden.

Im umgekehrten Sinne übt die Spindel 35 über das Widerlager 43 einen Zug auf den Schieber 37 aus. Durch diesen Zug wird der Schieber in Richtung Öffnung 21 bewegt und formschlüssig die kugelförmigen Schenkel der Schirmschienen 32, 33 so verschwenkt, daß die Schirmschienen eine Lage einnehmen, wie dies auf der rechten Seite dargestellt ist und in welcher die Antenne 3 leicht durch die Öffnung 21 aus dem Behälter 2 geführt werden kann. Es ist nun leicht zu erkennen, daß mit Hilfe des Stellgetriebes 34 selbst bei erheblicher Verschmutzung die Parabolantenne 3 jede Lage einnehmen kann, von ganz geschlossen bis ganz geöffnet.

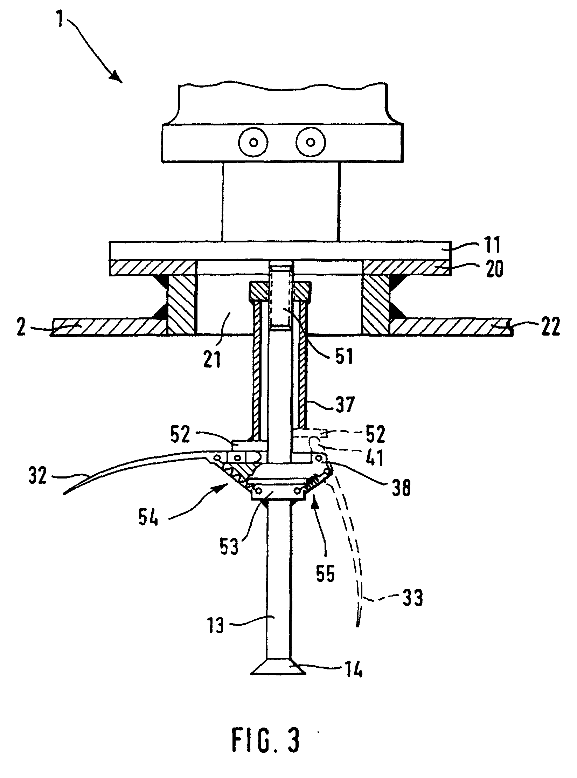

Die in Fig. 3 gezeigte Ausführungsform unterscheidet sich gegenüber der in Fig. 2 gezeigten lediglich dadurch, daß anstelle der Spindel 35 das Antennenrohr 13 selbst mit einem Bewegungsgewinde 51 versehen ist. Anstelle der Aufnahmen 40 zeigt diese Ausführungsform eine Druckplatte 52 in formschlüssiger Verbindung mit den kugelförmigen Schenkeln der Schirmschienen 32, 33. Weiter weist das Antennenrohr 13 eine, das Rohr umlaufende Federhalterung 53 auf. Zwischen der Federhalterung 53 und den Schirmschienen 32, 33, sind Zugfedern 54, 55 angeordnet. Bei dieser Ausführungsform bewirken die Federelemente 54, 55, daß die Antenne 3 bei Einführung in den Behälter 2 durch die Öffnung 21 sich in einer zusammengefalteten Lage befindet. Im Gegensatz zur Ausführung gemäß Fig. 2 geschieht das Aufschwenken der Antenne dadurch, daß der Schieber 37 um seine Achse verdreht und entlang des Gewindes 51 in Richtung Lagerring 38 bewegt wird. Durch diese Bewegung übt die Druckplatte 52 ein Moment auf die kugelförmigen Schenkel der Schirmschienen 32, 33 aus, so daß diese gegen die Wirkung der Zugfedern 54, 55 verschwenkt und geöffnet werden.

Eine Drehbewegung des Schiebers 37 in die andere Richtung wird zu einer Bewegung des Schiebers 37 in Richtung der Öffnung 21 führen so daß die Schirmschienen 32, 33 unter der Wirkung der Federkraft der Zugfedern 54, 55 zurück verschwenkt werden. Geschieht die Bewegung des Schiebers 37 weit genug, so werden die beiden Schirmschienen 32, 33 eine Lage einnehmen, in welcher die Antenne geschlossen und leicht aus dem Behälter 2 ausführbar ist. Auch bei dieser Ausführungsform kann von der Öffnung 21 aus die Parabolantenne 3 in jede beliebige Lage geöffnet und durch die Wirkung der Zugfedern auch unter Verschmutzung wieder geschlossen werden.

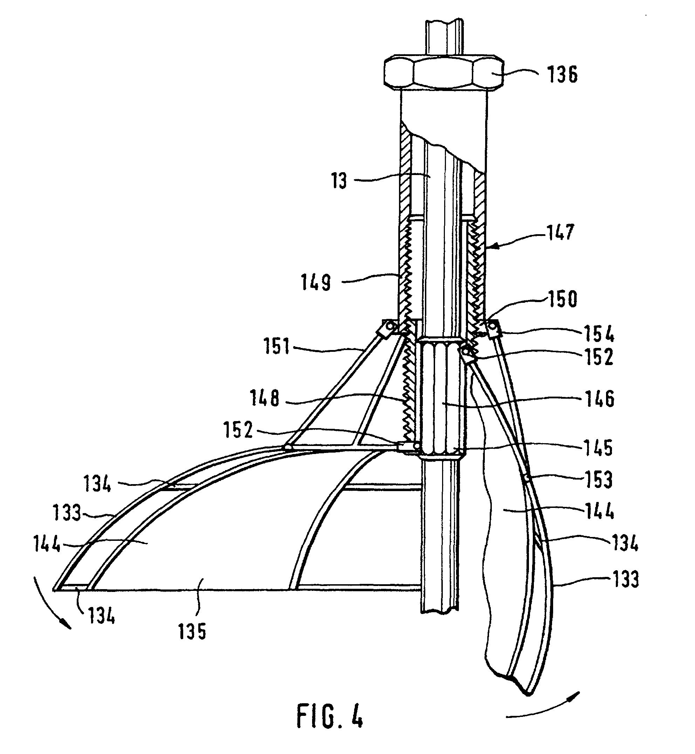

Figur 4 stellt die Weiterentwicklung der in den Figuren 2 und 3 gezeigten Ausführungsbeispiele dar. Auch hier ist ein kleinerer Abschnitt des Mikrowellen-Füllstandsmeßgerätes 1 dargestellt. Die Darstellung beschränkt sich auf die Parabolantenne 3 und die Stelleinrichtung. Auch in Fig. 4 ist wieder auf der linken Seite die geöffnete und auf der rechten Seite die geschlossene Lage der Parabolantenne aufgezeigt.

Die Parabolantenne 3 besteht aus einer Anzahl von Schirmschienen 133, von denen im Ausführungsbeispiel nur 5 dargestellt sind. Zur Einführung durch die Öffnung 21 in den Behälter 2 wird die Antenne eine Form einnehmen, wie sie auf der rechten Seite gezeigt ist. Zur Reflexion der Mikrowellen umspannt die Schirmschiene 133 eine flexible, aus einer temperaturbeständigen, druckfesten, korrosionsbeständigen und gegen statische Aufladungen neutrale faltbare Metallfolie 144. Diese Folie kann beispielsweise aus Stahl, Edelstahl, Aluminium oder einer Nickel-Chrom-Manganlegierung hergestellt sein. Aber auch eine metallisierte Kunststoffolie notwendiger Steifigkeit kann Verwendung finden. Um der Folienantenne die für die Funktion notwendige Steifheit zu verleihen, erstrecken sich zwischen den Schirmschienen 133 Querstreben 134. Diese umlaufen jedoch nicht den gesamten Parabolschirm, sondern lassen symmetrische Abschnitte 135 zwischen benachbarten Schirmschienen frei, durch welche sich die Folie bei Schließen der Antenne einfalten kann. Zum Öffnen und Schließen der Antenne ist an dem Antennenrohr 13 eine Muffe 145 angeformt oder unlösbar verbunden. Entlang ihres Umfanges weist die Muffe 145 sich in axialer Richtung erstreckende Nuten 146 auf. Diese sind symmetrisch mit gleichem Abstand an der Mantelfläche der Muffe 145 vorgesehen. Die Nuten 146 sind üblicherweise in einem spanabhebenden Verfahren hergestellt. Zum Öffnen und Schließen des Schirmes verfügt der Stelltrieb über ein Schraubengetriebe 147. Das Schraubengetriebe 147 ist aus einem Elementenpaar, nämlich dem Schraubenschieber 148 und der Spannmutter 149 gebildet. Ein Haltering 150 umläuft an dem, der Muffe 145 zugewandten Ende die Mantelfläche der Spannmutter 149 in einer Nut. Am Umfang des Halteringes 150 sind Lagerelemente angeformt, an welchen die Spreizstreben 151 eingreifen. Die Verbindung zwischen dem Haltering 150 und der Spannmutter 149 ist in der Passung eines leichten Gleitsatzes ausgeführt, so daß die Lagerelemente des Halteringes 150 ihre Lage am Umfang der Spannmutter 149 auch dann beibehalten, wenn die Spannmutter 149 um die eigenen Achse gedreht wird.

Weitere Lagerelemente 152 bilden mit dem Schraubschieber 148 eine formschlüssige Funktionseinheit und weisen Führungsrollen auf, über welche die Lagerelemente 152 in den Nuten 146 der Muffe 145 beweglich gelagert sind. Die Lagerelemente 152 bilden das dem Antennenrohr 13 zugewandte Ende der Antennenschienen 133. Sie bilden den Befestigungsund Drehpunkt und damit die Krone der Parabolantenne 3.

Durch die mittels der Wirkung eines Drehmomentes auf die Schlüsselflächen 136 ausgeführte Drehbewegung der Spannmutter 149 um ihre eigenen Achse, ist das Schraubengetriebe 147 in Gang gesetzt und bewirkt, daß der Schraubenschieber 148 in Richtung Mikrowellensensor und Empfänger 14 bewegt wird. Gleichzeitig wird damit das Lagerelement 152 in die gleiche Richtung bewegt und die Schirmschienen 133 durch die, einen Benäherbügel bildende Lagerung 153 der Spreizstreben 151 in ihrer Lage festgehalten, so daß die Schirmschienen 133 eine Schwenkbewegung um den Drehpunkt 153 ausführen und sich die Parabolantenne öffnet. Diese Bewegung setzt sich fort, bis die Lagerelemente 152 eine Stellung am Ende der Nuten 146 erreicht haben. Nach Beendigung dieses Vorganges nimmt die Parabolantenne eine Lage ein, wie sie auf der linken Seite der Fig. 4 dargestellt ist. Umgekehrt werden durch die entgegengesetzte Drehung der Spannmutter 149 die Lagerelemente 152 in Richtung der Öffnung 21 bewegt, bis die Rollen den oberen Endpunkt der Nuten 146 erreicht haben und die Schirmschienen 133 wieder ihre ursprüngliche Lage einnehmen.

Die metallischen Teile der Parabolantenne sind entweder aus einem den Meßmedien beständigen Werkstoff, wie z.B. hochlegierten Stählen ausgeführt oder aber mit einem diesen Medien beständigen Kunststoff überzogen. Sie können aber auch aus einem geeigneten Kunststoff hergestellt sein.

Die Ausführung des Gewindes des Schraubengetriebes 147 als ein Feingewinde, z. B. metrisches Feingewinde, z. B. nach DIN 13 erweitert die Möglichkeit der Lagebestimmung der Schirmschienen erheblich. Dadurch kann die Form des Parabolschirmes präzise genau nach dem größten Wirkungsgrad der Reflexion der Mikrowellenkeule in Abhängigkeit von der Beschaffenheit der Reflexionsebene reproduzierbar eingestellt werden.

Im Falle des notwendigen Zusammenfaltens der Parabolantenne und Ausführen des Mikrowellenmeßgerätes ergibt die Anwendung eines Schraubengetriebes durch dessen Übersetzung den Vorteil, daß die Antenne trotz einer erheblichen Verschmutzung zwangsbewegt wieder geschlossen werden kann, ohne daß eine Beschädigung von Schirmschienenstreben und Folie erfolgt.

Selbstverständlich ist die Erfindung nicht auf die Ausführungsform der aus einer flexiblen Folien gebildeten Parabolantenne beschränkt. Das zwangsweise Schließen und Öffnen mittels der erfindungsgemäßen Vorrichtung, ist auch bei einem aus stabilen Einzelelementen, bzw. Segmenten zusammengesetzten Antennenschirms möglich.

**Patentansprüche**

1. Parabolantenne zur Fokussierung von Sendeimpulsen bei der Messung des Füllstandes in geschlossenen Behältern mit einer kombinierten Sende- und Empfangseinrichtung mit welcher Sendeimpulse über die Parabolantenne auf die Oberfläche eines Füllgutes dessen Füllhöhe gemessen werden soll, gerichtet sind und deren Echoimpulse nach der Reflexion auf der Oberfläche des Füllgutes wieder von der kombinierten Sende- und Empfangseinrichtung über die Parabolantenne empfangen werden, wobei die Antenne zur Durchführung des Meßgerätes durch eine Öffnung des Behälters faltbar ist, **gekennzeichnet dadurch, daß** die Parabolantenne (3) eine Vorrichtung (15, 34, 37, 54, 55, 147) aufweist, durch welche eine schließende Faltung und öffnende Entfaltung des Parabolschirms (31) zwangsbewegt ist.

2. Parabolantenne nach Anspruch 1, **dadurch gekennzeichnet, daß** durch die Vorrichtung (15, 34, 37, 54, 55, 147) die, die Form des Paraboloiden bestimmenden Schimschienen in jeder gewünschten Lage von geöffnet bis geschlossen gehalten sind.

3. Parabolantenne nach Anspruch 1 **dadurch gekennzeichnet, daß** die Vorrichtung durch ein axial bewegliches Stellgetriebe (34) gebildet ist.

4. Parabolantenne nach Anspruch 1 **dadurch gekennzeichnet, daß** die Vorrichtung durch das Zusammenwirken von axial beweglichen Drehschieber (37) und Federelementen (54, 55) gebildet ist.

5. Parabolantenne nach Anspruch 1 **dadurch gekennzeichnet, daß** die Vorrichtung durch ein Schraubengetriebe (147) gebildet ist.

6. Parabolantenne nach Anspruch 3, **dadurch gekennzeichnet, daß** die axiale Bewegung des Stellgetriebes (34) die Verschwenkung der Schirmschienen (32, 33) um einen Drehpunkt (42) bewirkt.

7. Parabolantenne nach Anspruch 4 **dadurch gekennzeichnet, daß** die Verschwenkung der Schermaschinen (32, 33) um einen Drehpunkt (41) gegen und/oder mit der Wirkung von Federelementen (54, 55) erfolgt.

8. Parabolantenne nach Anspruch 5 **dadurch gekennzeichnet, daß** das Schraubengetriebe (147) aus den Elementenpaar Schraubschieber (148) und Spannmutter (149) gebildet ist.

9. Parabolantenne nach Anspruch 5 **dadurch gekennzeichnet, daß** die, die Krone der Parabolantenne bildenden Enden der Schirmschienen (133) als axial in Nuten (146) bewegliche Lagerelmente (152) ausgebildet sind, welche den Eingriffspunkt einer von der Axialbewegung des Schraubengetriebes (147) bewirkten Schwenkbewegung um einen, mit einem Benäherbügel (153) der Schirmschienen (133) zusammenfallenden Drehpunkt sind.

10. Parabolantenne nach Anspruch 5 **dadurch gekennzeichnet, daß** der Parabolschirm (31) Spreizstreben (151) aufweist, welche einerseits an einem Haltering (150) der Spannmutter (149) gelagert und andererseits mit dem Benäherbügel (153) der Schirmschienen (133) zusammenfallend die Drehpunkte der Schwenkbewegung der Schirmschienen (133) bilden.

11. Parabolantenne nach Anspruch 1 **dadurch gekennzeichnet, daß** der Parabolschirm (31) aus einem von Schirmschienen (133) und Querstreben (134) gebildeten Gitterrahmen und aus einer flexiblen Folie (144) gebildet ist.

12. Parabolantenne nach Anspruch 11 **dadurch gekennzeichnet, daß** die, die Oberfläche der Antenne bildende Folie (144) aus einer meßmediumbeständigen Metallfolie oder einer metallisierten Kunststoffolie gebildet ist.

13. Parabolantenne nach Anspruch 11 **dadurch gekennzeichnet, daß** die den Parabolschirm (31) bildenden Schirmschienen (133) und Querstreben (134) aus einem meßmedienbeständigen Metall hergestellt oder von einem meßmedienbeständigen Kunststoff überzogen sind.

14. Parabolantenne nach Anspruch 11 **dadurch gekennzeichnet, daß** am Umfang des Parbolschirms (31) von Querstreben (134) freigelassenen Abschnitte symmetrisch zwischen benachbarten Schirmschienen (133) verteilt sind, in welche sich Segment der Schirmfolie (144) einfalten.

15. Parabolantenne nach Anspruch 11 **dadurch gekennzeichnet, daß** die Schirmfolie (144) mit den Schirmschienen (133) und Querstreben (134) durch Kleben, Schweißen, sowie jedes andere dem Fachmann bekannte Verfahren verbunden ist.

16. Parabolantenne nach Anspruch 11 **dadurch gekennzeichnet, daß** die den Parabolschirm (31) bildenden Schirmschienen (133) und Querstreben (134) durch Schweißen, oder jedes andere dem Fachmann bekannte Verfahren verbunden sind.

17. Parabolantenne nach Anspruch 1 **dadurch gekennzeichnet, daß** der die Falt- und Entfaltbewegung auslösende Antrieb von Hand oder mittels elektrischer oder pneumatischer Hilfsenergie erfolgt.

18. Parabolantenne nach Anspruch 5 **dadurch gekennzeichnet, daß** das Schraubengetriebe (147) bildende Elementenpaar (148, 149) ein Bewegungsgewinde, vorteilhaft ein Feingewinde aufweist.

19. Parabolantenne nach Anspruch 1 **dadurch gekennzeichnet, daß** der Paraboloid aus formstabilen Einzelelementen bzw. Segmenten gebildet ist.

20. Parabolantenne nach Anspruch 1 **dadurch ge-**

**kennzeichnet, daß** das Füllstandsmeßgerät (1) Mittel zum Reinigen der Parabolantennen (3) aufweist.

21. Parabolantenne nach Anspruch 20 **dadurch gekennzeichnet, daß** die Mittel, mit einer äußeren Versorgungsleitung (19) verbunden pneumatische oder fluidische Reinigungsdüsen (17, 18) sind.

**Claims**

1. A parabolic antenna for focusing transmitted pulses during measurement of the level in closed containers, having a combined transmitting and receiving device by means of which transmitted pulses are directed via the parabolic antenna onto the surface of a filled material whose level is to be measured, and the echo pulses of which surface are received again by the combined transmitting and receiving device via the parabolic antenna after reflection at the surface of the filled material, it being the case that the antenna can be folded for the purpose of guiding the measuring instrument through an opening in the container, wherein the parabolic antenna (3) has a device (15, 34, 37, 54, 55, 147) by means of which the parabolic reflector (31) is positively moved to close by folding and to open by unfolding.

2. The parabolic antenna as claimed in claim 1, wherein the device (15, 34, 37, 54, 55, 147) holds the reflector rods, which determine the shape of the paraboloid, in any desired position from open to closed.

3. The parabolic antenna as claimed in claim 1, wherein the device is formed by an axially moveable actuating gear (34).

4. The parabolic antenna as claimed in claim 1, wherein the device is formed by the co-operation of an axially moveable rotary slide (37) and spring elements (54, 55).

5. The parabolic antenna as claimed in claim 1, wherein the device is formed by a worm gear (147).

6. The parabolic antenna as claimed in claim 3, wherein the axial movement of the actuating gear (34) effects the pivoting of the reflector rods (32, 33) about a fulcrum (42).

7. The parabolic antenna as claimed in claim 4, wherein the pivoting of the reflector rods (32, 33) about a fulcrum (41) is performed against and/or with the action of spring elements (54, 55).

8. The parabolic antenna as claimed in claim 5, wherein the worm gear (147) is formed from the element pair of a screw slide (148) and clamping nut (149).

9. The parabolic antenna as claimed in claim 5, wherein the ends, forming the crown of the parabolic antenna, of the reflector rods (133) are designed as bearing elements (152) which can move axially in grooves (146) and which are the point of action of a pivoting movement, effected by the axial movement of the worm gear (147), about a fulcrum coinciding with an attachment clip (153) of the reflector rods (133).

10. The parabolic antenna as claimed in claim 5, wherein the parabolic reflector (31) has expanding struts (151) which, on the one hand, are mounted on a holding ring (150) of the clamping nut (149) and, on the other hand, form, in a fashion coinciding with the attachment clip (153) of the reflector rods (133), the fulcrums of the pivoting movement of the reflector rods (133).

11. The parabolic antenna as claimed in claim 1, wherein the parabolic reflector (31) is formed from a lattice framework, formed by reflector rods (133) and transverse struts (134), and from a flexible foil (144).

12. The parabolic antenna as claimed in claim 11, wherein the foil (144) forming the surface of the antenna is formed from a metal foil resistant to the measured medium, or from a metallized plastic film.

13. The parabolic antenna as claimed in claim 11, wherein the reflector rods (133) and transverse struts (134) forming the parabolic reflector (31) are produced from a metal resistant to the measured medium, or are coated with a plastic resistant to the measured medium.

14. The parabolic antenna as claimed in claim 11, wherein sections left free of transverse struts (134) on the circumference of the parabolic reflector (31) and into which a segments of the reflector foil (144) fold are distributed symmetrically between neighboring reflector rods (133).

15. The parabolic antenna as claimed in claim 11, wherein the reflector foil (144) is joined to the reflector rods (133) and transverse struts (134) by bonding, welding, as well as any other method known to the person skilled in the art.

16. The parabolic antenna as claimed in claim 11, wherein the reflector rods (133) and transverse struts (134) forming the parabolic reflector (31) are joined by welding, or any other method known to the person skilled in the art.

**17.** The parabolic antenna as claimed in claim 1, wherein the drive initiating the folding and unfolding movements is performed by hand or by means of electric or pneumatic auxiliary energy.

**18.** The parabolic antenna as claimed in claim 5, wherein the element pair (148, 149) forming the worm gear (147) has a motion-transmitting thread, advantageously a fine thread.

**19.** The parabolic antenna as claimed in claim 1, wherein the paraboloid is formed from dimensionally stable individual elements or segments.

**20.** The parabolic antenna as claimed in claim 1, wherein the level-measuring instrument (1) has means for cleaning the parabolic antennas (3).

**21.** The parabolic antenna as claimed in claim 20, wherein the means are pneumatic or fluidic cleaning nozzles (17, 18) and are connected to an external supply line (19).

**Revendications**

**1.** Antenne parabolique destinée à concentrer des impulsions d'émission lors de la mesure du niveau de remplissage dans des réservoirs fermés munie d'un dispositif émetteur/récepteur combiné avec lequel les impulsions d'émission sont dirigées par le biais de l'antenne parabolique sur la surface d'un produit dont il faut mesurer le niveau et dont les impulsions d'écho sont de nouveau reçues par le dispositif émetteur/récepteur combiné par l'intermédiaire de l'antenne parabolique après leur réflexion sur la surface du produit, l'antenne pouvant être pliée pour pouvoir faire passer l'appareil de mesure à travers une ouverture du réservoir, **caractérisée en ce que** l'antenne parabolique (3) présente un dispositif (15, 34, 37, 54, 55, 147) qui provoque un pliage de fermeture forcé et un dépliage d'ouverture forcé de l'écran parabolique (31).

**2.** Antenne parabolique selon la revendication 1, **caractérisée en ce que** les baleines qui déterminent la forme du paraboloïde sont maintenues dans n'importe quelle position souhaitée entre l'ouverture et la fermeture par le dispositif (15, 34, 37, 54, 55, 147).

**3.** Antenne parabolique selon la revendication 1, **caractérisée en ce que** le dispositif est constitué d'un mécanisme de positionnement (34) mobile dans le sens axial.

**4.** Antenne parabolique selon la revendication 1, **caractérisée en ce que** le mécanisme est formé par l'action conjointe de coulisseaux rotatifs (37) mobiles dans le sens axial et d'éléments ressorts (54, 55).

**5.** Antenne parabolique selon la revendication 1, **caractérisée en ce que** le dispositif est constitué d'un mécanisme à vis (147).

**6.** Antenne parabolique selon la revendication 3, **caractérisée en ce que** le mouvement axial du mécanisme de positionnement (34) provoque le basculement horizontal des baleines (32, 33) autour d'un point de rotation (42).

**7.** Antenne parabolique selon la revendication 4, **caractérisée en ce que** le basculement horizontal des baleines (32, 33) autour d'un point de rotation (42) s'effectue contre et/ou avec le concours des éléments ressorts (54, 55).

**8.** Antenne parabolique selon la revendication 5, **caractérisée en ce que** le mécanisme à vis (147) est constitué de la paire d'éléments coulisseau à visser (148) et écrou de serrage (149).

**9.** Antenne parabolique selon la revendication 5, **caractérisée en ce que** les extrémités des baleines (133) qui forment la couronne de l'antenne parabolique sont réalisées sous la forme d'éléments supports (152) pouvant se déplacer dans le sens axial dans les rainures (146), éléments supports qui sont le point de contact d'un mouvement de basculement, provoqué par le déplacement axial du mécanisme à vis (147), autour d'un point de rotation coïncident avec un étrier de rapprochement (153) des baleines (133).

**10.** Antenne parabolique selon la revendication 5, **caractérisée en ce que** l'écran parabolique (31) présente des tirants d'écartement (151) qui d'un côté sont soutenus sur une bague d'arrêt (150) de l'écrou de serrage (149) et de l'autre côté forment, en coïncidence avec l'étrier de rapprochement (153) des baleines (133), les points de rotation du mouvement de basculement des baleines (133).

**11.** Antenne parabolique selon la revendication 1, **caractérisée en ce que** l'écran parabolique (31) est constitué d'un cadre quadrillé formé par les baleines (133) et les traverses (134) et d'un film souple (144).

**12.** Antenne parabolique selon la revendication 11, **caractérisée en ce que** le film (144) qui forme la surface de l'antenne est réalisé dans un film métallique ou dans un film en matière plastique métallisée résistant au fluide à mesurer.

**13.** Antenne parabolique selon la revendication 11, **caractérisée en ce que** les baleines (133) et les traverses (134) qui forment l'écran parabolique (31) sont fabriquées dans un métal résistant au fluide à mesurer ou revêtus d'une manière plastique résistante au fluide à mesurer.

**14.** Antenne parabolique selon la revendication 11, **caractérisée en ce qu'**entre des baleines (133) voisines sur le pourtour de l'écran parabolique (31) se répartissent de manière symétrique des sections laissées libres par les traverses (134) entre lesquelles viennent se plier les segments du film écran (144).

**15.** Antenne parabolique selon la revendication 11, **caractérisée en ce que** le film écran (144) est attaché aux baleines (133) et aux traverses (134) par collage, soudage et par toute autre méthode connue de l'homme de l'art.

**16.** Antenne parabolique selon la revendication 11, **caractérisée en ce que** les baleines (133) et les traverses (134) qui constituent l'écran parabolique (31) sont attachées par soudage ou par toute autre méthode connue de l'homme de l'art.

**17.** Antenne parabolique selon la revendication 1, **caractérisée en ce que** l'entraînement qui provoque le mouvement de pliage et de dépliage est déclenché à la main ou à l'aide d'une énergie auxiliaire électrique ou pneumatique.

**18.** Antenne parabolique selon la revendication 5, **caractérisée en ce que** la paire d'éléments (148, 149) qui constitue le mécanisme à vis (147) présente un filet de déplacement, avantageusement un filet fin.

**19.** Antenne parabolique selon la revendication 1, **caractérisée en ce que** le paraboloïde est constitué d'éléments individuels ou de segments indéformables.

**20.** Antenne parabolique selon la revendication 1, **caractérisée en ce que** l'appareil de mesure du niveau (1) présente des moyens pour nettoyer l'antenne parabolique (3).

**21.** Antenne parabolique selon la revendication 20, **caractérisée en ce que** les moyens sont des buses de nettoyage (17, 18) pneumatiques ou hydrauliques reliées à une conduite d'alimentation externe (19).

FIG. 1

FIG. 2

FIG. 3

FIG. 4